(19) **Europäisches Patentamt / European Patent Office / Office européen des brevets**

(11) **EP 3 574 351 B1**

(12) **EUROPEAN PATENT SPECIFICATION**

(45) Date of publication and mention of the grant of the patent:
**09.08.2023 Bulletin 2023/32**

(21) Application number: **18744858.4**

(22) Date of filing: **30.01.2018**

(51) International Patent Classification (IPC):
**G02B 5/18** (2006.01)    **G02B 5/00** (2006.01)

(52) Cooperative Patent Classification (CPC):
**G02B 5/008; G02B 5/1809**

(86) International application number:
**PCT/FI2018/050069**

(87) International publication number:
**WO 2018/138415 (02.08.2018 Gazette 2018/31)**

(54) **A PLASMONIC DEVICE**

PLASMONISCHE VORRICHTUNG

DISPOSITIF PLASMONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2017  FI 20175077**

(43) Date of publication of application:
**04.12.2019  Bulletin 2019/49**

(73) Proprietor: **Xfold Imaging Oy**
**02150 Espoo (FI)**

(72) Inventors:
• **PFISTERER, Simon**
**00014 Helsingin Yliopisto (FI)**
• **SOPANEN, Markku**
**00076 AALTO (FI)**
• **SUBRAMANIYAM, Nagarajan**
**02750 Espoo (FI)**
• **IKONEN, Elina**
**00014 Helsingin Yliopisto (FI)**
• **ISOMÄKI, Antti**
**00014 Helsingin Yliopisto (FI)**

(74) Representative: **Berggren Oy**
**P.O. Box 16**
**Eteläinen Rautatiekatu 10A**
**00101 Helsinki (FI)**

(56) References cited:
**WO-A1-2012/086236    US-A- 5 007 708**
**US-A1- 2006 140 538    US-A1- 2008 278 728**
**US-A1- 2008 316 490    US-A1- 2008 316 490**
**US-A1- 2010 110 525    US-A1- 2011 085 172**
**US-A1- 2011 267 613    US-A1- 2014 168 651**
**US-A1- 2014 242 573    US-A1- 2014 242 573**
**US-A1- 2015 087 141    US-A1- 2016 355 869**
**US-B1- 7 397 559**

• **CSETE ET AL: "Atomic force microscopical and surface plasmon resonance spectroscopical investigation of sub-micrometer metal gratings generated by UV laser-based two-beam interference in Au-Ag bimetallic layers", APPLIED SURFACE SCIENCE, ELSEVIER, AMSTERDAM, NL, vol. 253, no. 19, 18 July 2007 (2007-07-18), pages 7662-7671, XP022156076, ISSN: 0169-4332, DOI: 10.1016/J.APSUSC.2007.02.035**

**Description**

TECHNICAL FIELD OF THE INVENTION

The invention relates to surface plasmonic (SP) devices to enhance optical processes in samples in the proximity of the device. In particular, the invention relates to design and fabrication of plasmonic devices for linear and nonlinear microscopy and spectroscopy applications in physics, chemistry, biology, bioimaging and medical diagnostics field, for example.

BACKGROUND OF THE INVENTION

Many optical measurement techniques are nowadays used to image or characterize materials, structures, cells and tissue e.g. in physics, chemistry and biology. In many of these techniques the sample to be studied is placed on or in the proximity of the surface of a suitable substrate material. Many techniques also use light with known properties, such as laser light with a defined wavelength. To advance the state of the art in these case, the substrate on which the sample is placed, could contain some functionality to enhance the measurement process, such as containing surface plasmonic (SP) nanostructures for enhancing optical processes in samples on or in the proximity of the substrate.

The surface plasmonic (SP) nanostructures allow to manipulate light at nanoscale, which has potential to transform chemical, biological and medical imaging and sensing applications. SP nanostructures have been used to enhance the linear and nonlinear optical phenomena including second harmonic generation (SHG), third harmonic generation (THG), sum frequency generation (SFG) and two photon excited fluorescence (TPEF) spectroscopy, SERS, SHG ($\omega SHG=2\omega 1$), SFG ($\omega SFG=\omega 1+\omega 2$), four wave mixing (FWM) ($\omega FWM=2\omega 1-\omega 2$) and two photon excited luminescence (TPEL), fluorescence, two photon excited fluorescence (TPEF), total internal reflection microscopy (TIRF), structured illumination microscopy (SIM), fluorescence lifetime imaging (FLIM), stochastic optical reconstruction microscopy (STORM), stimulated emission depletion microscopy (STED).

Biomedical optical imaging techniques are playing a substantial role in the diagnosis, prevention and treatment of various diseases. Optical microscopy is widely used to visualize molecules in medicine and in biosciences. In optical microscopes, including the super-resolution microscopes, high-intensity light is directed onto a sample, which is placed on a coverslip glass. In biological materials, i.e., typically cells or tissues, essentially all molecules and a large fraction of subcellular organelles are smaller than the lateral and depth resolution of conventional confocal microscopes. This is an obstacle for visualizing these structures in detail. In addition, sensitivity of detection is a major bottleneck: the number of molecules may be too small to be detected or only a small fraction of them can be detected. In currently used techniques the improved sensitivity and resolution typically require increase in illumination intensity or use of higher concentrations of fluorophores. These can be severely limiting factors, especially in live sample imaging, due to direct photodamage or phototoxic effects. In addition temperature of the structures of the prior art surface plasmonic (SP) nanostructures illuminated with high intensity light might rise too much, which causes evaporating of the structured and other problems.

Fluorescence microscopy is one the most widely used imaging methods in biology by means of its molecular and chemical specificity. The fluorescence microscope is based on the phenomenon that certain materials, for example fluorophores or dyes have large absorption cross-sections at a specific wavelength and emit light at a longer wavelength when irradiated with the light of a specific wavelength. The fluorescent species-labeled molecules are very bright and distinguishable in fluorescence microscopy imaging.

However, the spatial resolution of light microscopy is limited by diffraction of light to several hundred of nanometers. This is critical because within cells, the units of life, biomolecules are of nanometer scale. In addition, in cells biomolecules typically exist at low, i.e. nanomolar, concentration, requiring high sensitivity for detection. To overcome the limit, super-resolved fluorescence microscopy was developed.

Raman spectroscopy is widely used method to identity the molecules by means of their vibrational, rotational, and low-frequency modes. In conventional Raman spectroscopy, high-intensity monochromatic light, usually from a laser in the visible or near infrared is directed onto a sample. The photons are absorbed or emitted by the sample and also the scattered photons are shifted up or down. The shift in energy provides the information about the phonon modes in the system. Spontaneous or conventional Raman scattering is very week with a cross-section of ~10-30cm$^2$ and 1 in 107 photons are inelastically scattered by the sample molecules.

The various Raman spectroscopy based techniques such as SERS, coherent anti-Stokes Raman scattering (CARS), stimulated Raman scattering (SRS) and tip-enhanced Raman scattering (TERS), Hyper Raman (HR), Resonance Raman, spatially offset Raman spectroscopy, Angle-resolved Raman spectroscopy have been applied to increase the sensitivity. Among these methods, CARS, Hyper Raman (HR) and SRS utilize the nonlinear processes. CARS and SRS use two pulsed excitation laser beams at the pump ($\lambda 1$) and Stokes ($\lambda 2$) wavelengths, and the output signal is generated via FWM processes. They interact with the sample and generate a signal at $1/\lambda FWM=2/\lambda -1/\lambda 2$. These methods provide the improvement of signal sensitivity by coherent nonlinear optical processes. However, the signal sensitivity of CARS is still too low to visualize nano-sized particles in sample and also the plasma membrane in cell.

The CARS signal will be enhanced, if the pump or Stokes excitation wavelengths are in resonance with the surface plasmons of plasmonic nanostructures on which the molecules are positioned. SECARS has been proposed to increase the signal sensitivity significantly using nanostructured metal surfaces.

The previous attempts to develop nanostructures for suitable SECARS substrates resulted in broad visible TPEL signal due to the intrinsic emission of the metal substrate. The TPEL signal causes a disturbing background in FWM or CARS imaging of nano-sized particles. An important hurdle in developing nanostructures for suitable SECARS is resolved by the present invention.

The detection, identification and molecular imaging of different chemical and biological composition species inside a sample with nano-sized particles sensitivity using CARS spectroscopy has not been done. The detection and visualization of plasma membrane has remained a challenge. The embodiments of this invention address these problems in the current state of the art and potential applications in biology, bioimaging, medical diagnostic, pathology, toxicology, forensics, cosmetics, chemical analysis and numerous other fields.

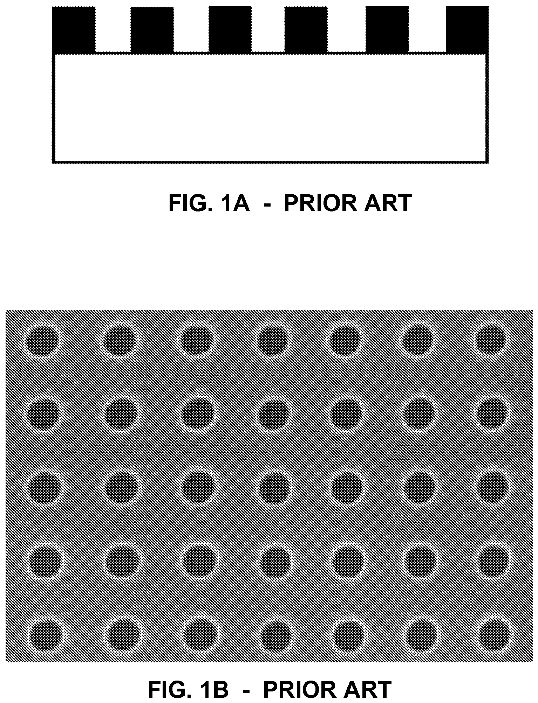

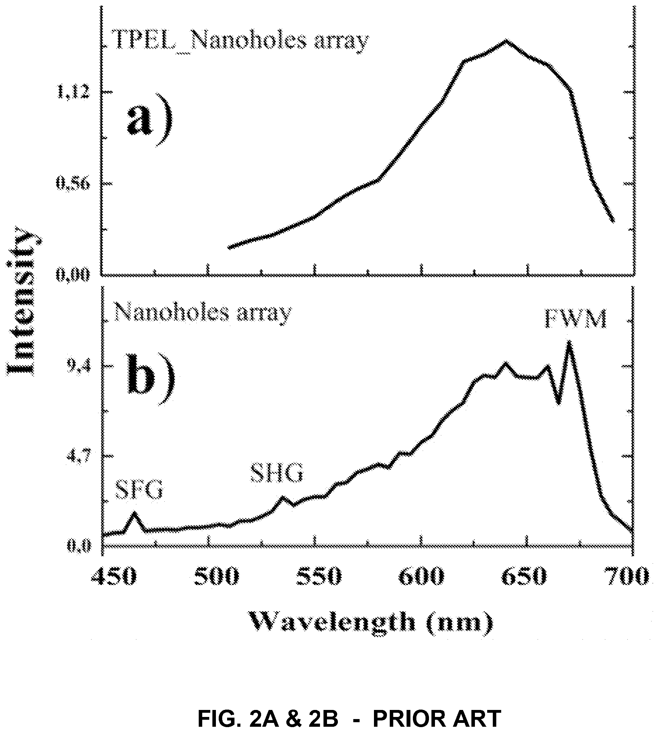

One prior art nanostructure device is depicted in Figures 1A and 1B, where Figure 1A illustrates a prior art plasmonic nanohole array and Figure 1B illustrates a top-view SEM image of the prior art nanohole array. In addition Figure 2A illustrates an exemplary emission spectrum of a gold nanohole array using the excitation wavelength of 780 nm according to the prior art nanohole array, and Figure 2B illustrates an exemplary emission spectrum of a gold nanohole array using the combination of excitation wavelengths of 817 nm and 1064 nm according to the prior art nanohole array.

The background disturbing luminescence in Figure 2A comes from the two-photon excitation process, and the disturbing SFG, SGH, and FWM peaks can be seen on top of the broad TPEL emission spectrum in Figure 2B.

In more details Figure 2A shows the TPEL of the nanohole array in thin gold film with a periodicity of 400 nm with excitation wavelength of 780 nm. The TPEL shows a broad peak in the range of 550-675 nm that is centered at about 625 nm. The nanohole array with 400 nm periodicity shows transmission maxima of the localized surface plasmon peaks (1,1) and (1,0) at 610 nm and 780 nm, respectively. The localized surface plasmon wavelength (1,0) of the nanohole array resonates with the excitation wavelength of 780 nm, which enhances the nonlinear TPEL intensity. In this embodiment, the nanoholes array can be used in TPEF spectroscopy for high sensivity molecular imaging.

In addition Figure 2B shows the nonlinear coherent emission spectrum of a nanohole array with a periodicity of 400 using the combination of pump wavelength of 817 nm and the Stokes wavelength of 1064 nm laser. The spectra show the SFG, SHG and FWM signals on top of the broad band TPEL. The SFG and SHG peaks are related to the plasmon-enhanced second order coherent response and the FWM signal corresponds to the plasmon-enhanced third order coherent response. The second and third order nonlinear responses are influenced by the geometrical symmetry of the nanohole arrays.

Upon laser irradiation of metallic nanostructures for example in nanohole and nanoantenna structures, electromagnetic energy is absorbed and dissipated as heat and it evaporates the nanostructures. The smallest nanostructures have the maximum surface heat or temperature, where the evaporation is largest. The surface plasmon resonance of the smallest nanostructures coincides with excited heating laser wavelength. In the devices according to the present invention the absorption of the electromagnetic energy is smaller and thus it produces very less or negligible heat. This is especially due to the geometry (elongated grooves length are long), but also the thickness of the underlying layers contributes this advantage.

Plasmonic devices for enhancing optical processes in samples are known e.g. from US2011/267613, US2008/316490, and US2011/085172.

SUMMARY OF THE INVENTION

An object of the invention is to alleviate and eliminate the problems relating to the known prior art. Especially the object of the invention is to provide a surface plasmonic device that enhances electric field at the surface or in the proximity of the plasmonic device, and most advantageously produces an enhanced electric near field in the vicinity of the metal so that to provide as uniform near field distribution as possible, and not rely on hot-spots, like many SERS techniques do. This enhancement is advantageous in various microscopic and spectroscopic measurements. Especially it is advantageous when using light on certain frequencies, such as narrow frequency band LED light and laser light that utilize laser light to excite optical processes in samples lying on or in the proximity of the surface of the device. In addition the object is to avoid disturbing background signals and at the same time also enable large laser powers to be used without a significant risk to damaging the plasmonic device, such as evaporating the structure material of the nanostructured device. The object advantageously may also allow use of lower light intensities to reach clear images while limiting the heating of the plasmonic device and the sample being investigated that can be advantageous especially in some areas of biological microscopy. In particular, object of the invention is to provide and develop the plasmonic device, which is suitable for microscopy linear and nonlinear spectroscopy, and particularly for laser-based microscopy and spectroscopy.

The present invention relates to the design and fabrication of surface plasmonic (SP) nanostructures, such as nanogratings, for linear and nonlinear spectroscopy, microscopy and imaging applications in physics, chemistry, biology, and medical sciences. Surface plasmon polaritons (SPPs) are collective oscillations of free electrons at the interface between a metal and a dielectric. This produces an enhanced electric near field in the vicinity of the metal. To couple excitation light used in these measurements to the SPPs, nanogratings can be used. When the structure is designed properly and is in resonance with the incoming light field, amplification of certain optical processes can be achieved. However, in contrast to many surface enhanced Raman spectroscopy (SERS) techniques, the design principle here is to provide as uniform near field distribution as possible, and not to rely on hot-spots, like many SERS techniques do.

The object of the invention can be achieved by the features of independent claims.

The invention relates to a plasmonic device to enhance optical processes in samples on or in the proximity of the device according to claim 1. In addition the invention relates to a manufacturing method for manufacturing the plasmonic device according to claim 13.

The plasmonic device according to the embodiments of the invention is configured to enhance optical processes in samples lying on or in the proximity of the surface of the plasmonic device. The plasmonic devices are generally configured to enhance the optical processes of Raman scattering (RS), linear and nonlinear surface enhanced Raman scattering (SERS), coherent anti-Stokes Raman scattering (CARS) and surface enhanced coherent anti-Stokes Raman scattering (SECARS), but in addition to also to enhance the optical processes of fluorescence, second harmonic generation (SHG), sum frequency generation (SFG), and two photon excited fluorescence (TPEF) and all non-linear processes. The plasmonic structures according to advantageous embodiment of the invention comprise nanograting structures with elongated grooves and comprise also advantageously predefined continuous shape and patterns for enhancing four wave mixing (FWM) signal intensity without two photon excited luminescence (TPEL) background in SECARS imaging.

The plasmonic device comprises a substrate and the plasmonic structure. The plasmonic structure according to the embodiment comprises both a (full) metal layer and a metal grating in connection with the metal layer, advantageously next to the metal layer. In addition the plasmonic device may also comprise an adhesion layer between the substrate and the plasmonic structure. Further the plasmonic device may also comprise a protective layer above the metal layer or metal grating. It is to be noted that the adhesion layer and the protective layer are optional, but useful in some embodiments as described elsewhere in this document.

The metal grating of the device comprises elongated metal stripes and elongated empty spacing or grooves between the stripes. The thickness of the metal grating is advantageously in the range of 5 - 500 nm, and the width of the elongated metal stripes in the metal grating is advantageously in the range of 10 - 1000 nm. The empty spacing or grooves between the two adjacent elongated metal stripes in the metal grating is advantageously in the range of 10 - 1000 nm.

The periodicity is described as of the adjacent elongated metal stripes in the metal grating comprising the sum of the width of one elongated metal stripe and the width of the empty spacing or grooves of two adjacent elongated metal stripes. The periodicity is advantageously selected to resonate with either the molecular vibrational frequency of a substance in the sample or the frequency of the exciting laser light or both of them. Advantageously in some embodiment the periodicity in the metal grating is in the range of 10 - 1000 nm.

According to an embodiment the device may comprise the optional protective layer on top the structure. Advantageously the thickness of the protective layer is in the range of 1 - 50 nm, and the protective layer comprises any dielectric materials, such as $Al_2O_3$, $TiO_2$, $SiO_2$. In addition the device may comprise also the optional adhesion layer, which is advantageously deposited using materials, such as chromium, titanium and $TiO_2$. The thickness of the adhesion layer (002) is advantageously in the range of about 1 - 50 nm.

The substrate of the plasmonic device can advantageously comprise any material, the most usual being coverslip glass (borosilicate glass), normal glass (silica glass), quartz, calcium fluoride ($CaF_2$) and silicon. The thickness of the substrate is advantageously in the range of 50 μm - 5 mm.

In addition according to advantageous embodiments the (full) metal layer and/or the metal grating comprise any plasmonic materials, such as gold, silver, copper, platinum, palladium, aluminium, or any other material that enhances the optical processes. The thickness of the full metal layer is in the range of 50 - 100 nm.

The plasmonic structure described here comprises advantageously nanostructures, such as layers and/or predefined continuous shapes and patterns, such as grooves, for enhancing four wave mixing (FWM) signal intensity without two photon excited luminescence (TPEL) background in SECARS imaging. According to an example the spacing between the two adjacent elongated grooves is advantageously in the range of about 10-1000 nm. The continuous shape and patterns can be described by a periodicity (periodicity of the two adjacent elongated grooves), which comprises the width of the two adjacent elongated grooves and the spacing of the two adjacent elongated grooves. The periodicity is selected to resonate with the molecular vibrational frequency and/or excited laser light frequency, fluorescent dye or fluorophore and the structure is manufactured so that the periodicity fulfils the formula:

$$\lambda_{SP\,(i,j)} = \sqrt{\frac{\varepsilon_d \varepsilon_m}{\varepsilon_d + \varepsilon_m}} \frac{P}{\sqrt{i^2 + j^2}},$$

where $\lambda_{SP\,(i,j)}$ is the resonance wavelength, P is the periodicity, the integers (i, j) represent the Bragg resonance

orders, and $\varepsilon_d$ and $\varepsilon_m$ are the dielectric functions of the metal/dielectric and the measurement medium, respectively.

According to embodiments of the invention the plasmonic device described in this document is therefore configured to enhance the optical processes of Raman scattering (RS), linear and nonlinear surface enhanced Raman scattering (SERS), coherent anti-Stokes Raman scattering (CARS) and surface enhanced coherent anti-Stokes Raman scattering (SECARS), stimulated Raman scattering (SRS), Hyper Raman (HR). In addition the plasmonic device is configured to enhance the optical processes of fluorescence, multiphoton fluorescence, total internal reflection, second harmonic generation (SHG), third harmonic generation (THG), sum frequency generation (SFG), and two photon excited fluorescence (TPEF).

The structure and dimensions and thicknesses of the nanostructures of the plasmonic device according to embodiments of the present invention offers clear advantages over the known prior art, namely for example the disturbing background signals especially in FWM or CARS imaging of nano-sized features can be avoided. In addition, due to spacing between the two adjacent elongated grooves or other features as well as other dimensions of the material of the plasmonic device does not evaporate even with relative strong pulsed laser powers, which is the problem especially with the nanohole structures or nanoantennas in the prior art.

The plasmonic device according to the present invention can be manufactured for example by providing a plasmonic structure 008 comprising a (full) metal layer 003 and a metal grating 004 on a substrate layer 001 using electron beam lithography (EBL) or nanoimprint lithography (NIL) techniques and lift-off or wet or dry etching process.

According to an exemplary embodiment a method for manufacturing the plasmonic device comprises at least the following steps:

- providing a plasmonic structure 003, 004 on a substrate 001, said plasmonic structure 003, 004 comprising

  o a full metal layer 003 and
  o a metal grating 004 in connection with the full metal layer 003 and

- providing an optional adhesion layer 002 between the substrate 001 and the plasmonic structure 003, 004 and/or an optional protective layer above the full metal layer 003 or metal grating 004.

In addition the providing of the plasmonic structure comprising a full metal layer 003 and/or a metal grating 004 is advantageously performed by using electron beam lithography (EBL) or nanoimprint lithography (NIL) techniques, and the lift-off technique or by wet or dry etching process. Providing of the optional protective layer is advantageously performed by using deposition methods such as vacuum evaporation, sputtering, plasma enhanced chemical vapor deposition (PECVD), and atomic layer deposition (ALD).

The present invention offers advantages over the known prior art. The plasmonic nanostructured devices according to the invention have a predefined shape or dimensions, arrangement and pattern which results in the strong enhancement of a number of optical phenomena, such as reflectance, absorption, extraordinary optical transmission, linear and nonlinear Raman scattering processes, FWM, SHG, THG, SFG, TPEL and other optical effects. The present invention relates to the SP nanostructures optical resonance phenomena with the excited laser light wavelength and molecular vibrational frequency for strong enhancement of linear and nonlinear Raman scattering processes and fluorescent dye or fluorophores.

According to an embodiment the device may be implemented e.g. on a coverslip glass that can be inserted in a microscope in place of a current coverslip glass, suitable for use for example in laser microscopy. The device is preferably designed so that light is shown and collected from the top side of the device, where also the sample to be imaged is located (not for example light coming from below).

The exemplary embodiments presented in this text are not to be interpreted to pose limitations to the applicability of the appended claims. The verb "to comprise" is used in this text as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific example embodiments when read in connection with the accompanying drawings.

BRIEF DESCRIPTION OF THE DRAWINGS

Next the invention will be described in greater detail with reference to exemplary embodiments in accordance with the accompanying drawings, in which:

Figure 1A    illustrates a prior art plasmonic nanohole array,

Figure 1B    illustrates a top-view SEM image of the prior art nanohole array,

Figure 2A    illustrates an exemplary emission spectrum of a gold nanohole array using the excitation wavelength of 780 nm according to the prior art nanohole array,

Figure 2B    illustrates an exemplary emission spectrum of a gold nanohole array using the combination of excitation wavelengths of 817 nm and 1064 nm according to the prior art nanohole array,

Figure 3A    illustrates an exemplary schematic structure of an embodiment of the device according to an advantageous embodiment of the invention,

Figure 3B    illustrates a top-view SEM image of an exemplary embodiment of the device according to an advantageous embodiment of the invention used to enhance CARS signal by two orders of magnitude,

Figure 4     illustrates an exemplary embodiment of an optical reflectance measurement of a 1-dimensional grating structure made of gold in contact with materials having various refractive indexes according to an advantageous embodiment of the invention,

Figure 5     illustrates an exemplary emission spectrum of a 1-dimensional gold grating of the invention using the combination of excitation wavelengths of 817 nm and 1064 nm according to an advantageous embodiment of the invention.

DETAILED DESCRIPTION

The different embodiments of plasmonic devices according to the invention are next described by referring to Figures 1-5.

The present invention is directed to surface plasmonic (SP) structures having well defined features at predetermined locations on a substrate for enhancing optical signal resulting from enhanced optical processes used in linear and nonlinear spectroscopy, microscopy and imaging techniques, such as SERS, SECARS and SRS.

Figures 1A-1B and 2A-2B are already discussed in more details in the connection with the technical background chapter in this document.

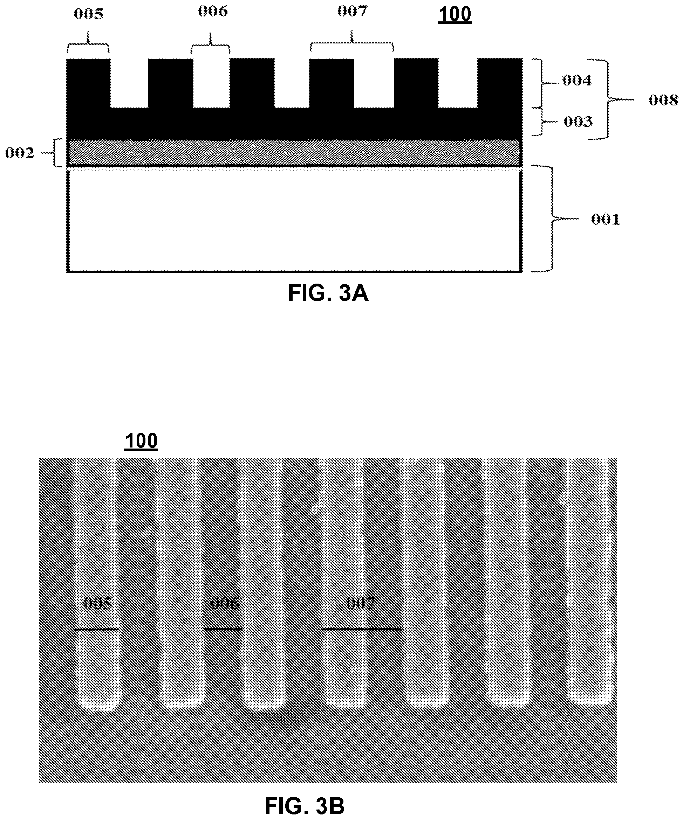

An exemplary embodiment of the present invention of SP structures is shown in Figure 3A. According to an embodiment of the invention the plasmonic device can be constructed in several ways, but it advantageously comprises at least one metal layer 003 and a 1-dimensional metal grating 004 consisting of metal stripes. Usually the device is constructed on some foreign substrate 001. The adhesive layer 002 is usually advantageous with metallic layers, but it is not necessary in some cases, thus being optional. The next layer is the thin metal layer 003. On top of the metal layer there is the 1-dimensional metal grating 004 comprising elongated metal stripes 005 and elongated empty spacing or grooves 006 between the stripes is fabricated. Finally, a protective layer can be added on top of the nanostructure 008, especially when using materials which oxidise easily.

The operation of the device is based on advantageous formation of surface plasmon-polaritons in the interface between the metal grating and the measurement medium. The thicknesses of the layers and the dimensions of the grating are designed to enhance the electric field on the surface of the device when light with a known wavelength or wavelengths, typically from lasers or light emitting diodes (LEDs), is directed to the device.

As an example, the thickness of the underlying substrate 001 is in the range of 50 $\mu$m - 5 mm, and the thickness of the optional adhesion layer 002 is in the range of about 1 - 50 nm. Furthermore, the thickness of the (full) metal layer 003 is in the range of 50 nm - 100 nm, and the thickness of the metal grating 004 is advantageously in the range of 5 - 100 nm. Furthermore, the width 005 of the elongated metal stripes in the metal grating 004 is advantageously in the range of 10 - 1000 nm, and the empty spacing or grooves 006 between the two adjacent elongated metal stripes in the metal grating 004 is in the range of 10 - 1000 nm. Also the stripes in the metal grating 004 are advantageously continuous with a length of at least 10 $\mu$m, reaching even 5 cm in large-area substrates. This is different for example from the nanoantennas used in certain techniques, thereby offering as uniform near field distribution as possible, and not relying on hot-spots as is the case e.g. with the nanohole and nanoantenna structures.

According to an example a periodicity 007 of the adjacent elongated metal stripes in the metal grating 004 comprises the sum of the width 005 of one elongated metal stripe and the width 006 of the empty spacing or grooves of two adjacent elongated metal stripes. The periodicity 007 is advantageously selected to resonate with either the molecular vibrational frequency of a substance in the sample or the frequency of the exciting laser (or LED) light or both of them. As an example, the periodicity 007 in the metal grating 004 is advantageously in the range of 10 - 1000 nm.

In addition, according to an embodiment the device 100 comprises a protective layer covering advantageously the whole surface. The thickness of the protective layer is advantageously in the range of 1 - 50 nm.

According to an embodiment the substrate 001 of the plasmonic device 100 comprises materials, such as coverslip glass (borosilicate), normal glass (silica), quartz, calcium fluoride ($CaF_2$), and silicon. In addition, according to embodiments the adhesion layer 002 is deposited using materials, such as chromium, titanium or and $TiO_2$. According to embodiments the (full) metal layer 003 and the metal grating 004 comprises any plasmonic materials, such as gold, silver, copper, platinum, palladium, aluminium, or any other material which is able to maintain surface plasmon-polaritons. Furthermore, the protective layer comprises advantageously any dielectric materials, such as $Al_2O_3$, $TiO_2$, $SiO_2$.

The periodicity 007 includes the 005 and 006 and is selected to resonate with the molecular vibrational frequency and excited laser light frequency.

Figure 3B shows a scanning electron microscopy (SEM) image of an exemplary embodiment 100 of the presented invention from a top-view, where the width 005 of one elongated metal stripe and the width 006 of the empty spacing or grooves of two adjacent elongated metal stripes and thereby the periodicity 007 can be clearly seen.

This SP structure was fabricated on a coverslip glass substrate using electron beam lithography (EBL) to form the pattern. A 5 nm thick titanium adhesion layer followed by 60 nm thick gold layer were deposited by a metal evaporator in this exemplary embodiment. After spinning of the resist and the EBL exposure of the pattern another gold layer was deposited and a lift-off process was used to form the well-defined grating structure as shown in the SEM image of Figure 3B. This configuration has been shown to resonate with the exciting laser light frequency to enhance the linear and nonlinear Raman scattered intensity by two orders of magnitude in CARS imaging. The thickness of the underlying continuous metal layer 003 is crucial for heat conduction in pulsed light CARS imaging. In the measurements of the exemplary embodiment and with strong laser powers thickness over 50 nm has been found beneficial for the underlying continuous metal layer 003.

One example is a green fluorescent protein (GFP) imaging, where the SP nanograting is made to resonate with the excitation light (488 nm) to enhance absorption of light to the fluorescence markers. The nanograting material can be silver in this case and a thin protective layer is advantageously added to avoid oxidation.

The present invention relates to SP nanostructures having predefined shape, arrangement and pattern which results in the strong enhancement of a number of optical phenomena, such as reflectance, absorption, extraordinary optical transmission, linear and nonlinear Raman scattering processes, FWW, SHG, SFG, TPEL and other optical effects. The SP nanostructures are designed to resonate with the excited laser (or LED) light wavelength and molecular vibrational frequency of the substance to be detected.

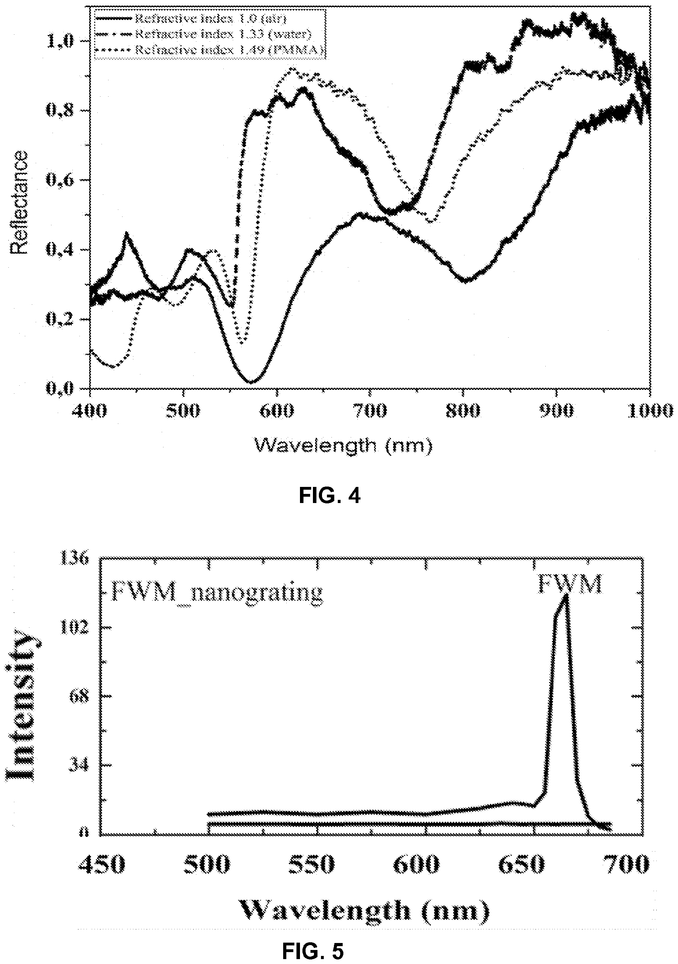

Figure 4 illustrates an exemplary embodiment of an optical reflectance measurement of a 1-dimensional grating structure made of gold in contact with materials having various refractive indexes according to an advantageous embodiment of the invention. This preferred embodiment has a SP nanograting structure with a grating layer 004 thickness of 60 nm, stripe width 005 of 220 nm, spacing 006 of 100 nm and periodicity 007 of 320 nm on an area of $30 \times 30$ $\mu m^2$, for example. This structure resonates at the wavelength of 817 nm when the medium is air. The optical reflectance properties of the SP nanograting structures were characterized with varying refractive indexes of 1 (air), 1.33 (water) and 1.49 (PMMA). The incident TM polarized light was illuminated along the SP nanograting structure and the reflected light was collected by the optical spectrometer. The measurement spectra show the surface plasmon resonance wavelengths with respect to the predefined SP nanograting structures. This present invention relates to the use of SP nanograting structures as disclosed herein to resonate with the excited laser beam and molecular vibrational frequency for enhancing linear and nonlinear Raman scattering, TPEL, SHG, SFG and FWM signal intensity.

The periodicity 007 of the grating can be selected using the formula presented elsewhere in this document. Then, the thickness 004 of the grating as well as the width of the elongated metal stripes 005 and width of the grooves 006 can be selected to optimize the resonance performance of the structure. The thickness of the grating 004 should be sufficient to provide the resonance and enhancement to the signal.

Figure 5 illustrates an exemplary emission spectrum of a 1-dimensional gold grating of the invention using the combination of excitation wavelengths of 817 nm and 1064 nm according to an advantageous embodiment of the invention.

In particularly Figure 5 shows the nonlinear coherent emission spectrum of a nanograting structure using the combination of pump wavelengths of 817 nm and the Stokes wavelengths of 1064 nm laser. The spectra show a dominant FWM signal intensity compare to the 60 nm thick gold layer. The SP nanostructures including nanohole arrays in thin gold films (as is the case in prior art devices) produces broad TPEL signal, which causes the disturbing background in CARS imaging of molecules. In the embodiment described in Figures 3A, 3B and 5, the nanograting structures enhances FWM signal intensity without TPEL background, which enables to image the nano-sized particles in sample.

The nonlinear coherent emissions of FWM, TPEL, SHG and SFG signal intensities are significantly enhanced by using SP nanostructures such as nanograting and nanohole arrays. This invention can be used in biological, bioimaging, medical diagnosis, pathology and chemical applications where it is useful to detect and identify the small number of molecules in sample.

The present invention relates to the design of surface plasmonic (SP) nanostructures, such as nanograting arrays for enhancing linear and nonlinear optical processes including surface enhanced Raman scattering (SERS) and surface enhanced coherent anti-Stokes Raman scattering (SECARS) spectroscopy to visualize the nano-sized particles in samples. In particular, one aspect of the SP nanograting structures of predefined shape and patterns, which enhances the four wave mixing (FWM) signal intensity without two photon excited luminescence (TPEL) background in SECARS imaging. In another embodiment of the invention, the SP nanostructures can be used for second harmonic generation (SHG), sum frequency generation (SFG) and two photon excited fluorescence (TPEF) spectroscopy.

The invention has been explained above with reference to the aforementioned embodiments, and several advantages of the invention have been demonstrated. It is clear that the invention is not only restricted to these embodiments, but comprises all possible embodiments within the following patent claims.

The features recited in dependent claims are mutually freely combinable unless otherwise explicitly stated.

**Claims**

1. A plasmonic device (100) to enhance optical processes in samples lying on or in the proximity of the surface of the device, wherein the device (100) comprises:

    - a substrate (001),
    - a plasmonic structure (003, 004) comprising:

        o a full metal layer (003) and
        o a metal grating (004) in connection with the full metal layer (003), wherein the metal grating comprises elongated metal stripes and elongated empty spacing or grooves between the stripes, wherein the periodicity (007) of the adjacent elongated metal stripes in the metal grating (004) comprises the sum of the width (005) of one elongated metal stripe and the width (006) of the empty spacing or grooves of two adjacent elongated metal stripes,

    **characterized in that** the thickness of the full metal layer is 50 nm - 100 nm and **in that** the periodicity (007) is selected to resonate with either the molecular vibrational frequency of a substance in the sample or a frequency of laser light or narrow frequency band LED light used to excite optical processes in the sample or both of them.

2. A device (100) of claim 1, wherein the thickness of the substrate (001) is in the range of 50 $\mu$m - 5 mm, the device additionally comprises an adhesion layer (002) between the substrate and the plasmonic structure wherein the thickness of the adhesion layer (002) is in the range of about 1 - 50 nm, and/or the thickness of the metal grating (004) is in the range of 10 - 200 nm.

3. A device (100) of any previous claims, wherein the width (005) of the elongated metal stripes in the metal grating (004) is in the range of 10 - 1000 nm and/or wherein the empty spacing or grooves (006) between the two adjacent elongated metal stripes in the metal grating (004) is in the range of 10 - 1000 nm.

4. A device (100) of any previous claims, wherein the periodicity (007) in the metal grating (004) is in the range of 10 - 1000 nm.

5. A device (100) of any previous claims, wherein the device additionally comprises a protective layer above the full metal layer or metal grating, wherein the thickness of the protective layer is in the range of 1 - 50 nm.

6. A device (100) of any previous claims, wherein the substrate (001) of the plasmonic device (100) comprises a material selected from the group of coverslip glass (borosilicate glass), quartz, normal glass (silica glass), calcium fluoride ($CaF_2$) and silicon.

7. A device (100) of any previous claims, wherein the device additionally comprises an adhesion layer (002) between the substrate and the plasmonic structure and the adhesion layer (002) is deposited using a material selected from the group of chromium, titanium and $TiO_2$.

8. A device (100) of any previous claims, wherein the full metal layer (003) and/or the metal grating (004) comprises a plasmonic material, selected from the group of gold, silver, copper, platinum, palladium, aluminium, or any other material that enhances the optical processes.

9. A device (100) of any previous claims, wherein the device additionally comprises a protective layer above the full metal layer or metal grating wherein the protective layer comprises a dielectric material, such as $Al_2O_3$, $TiO_2$, $SiO_2$.

10. A device (100) of any previous claims, wherein the periodicity of the device is selected to enhance the optical processes of Raman scattering (RS), linear and nonlinear surface enhanced Raman scattering (SERS), coherent anti-Stokes Raman scattering (CARS) and surface enhanced coherent anti-Stokes Raman scattering (SECARS), stimulated Raman scattering (SRS).

11. A device (100) of any previous claims, wherein the periodicity of the device is selected to enhance the optical processes of fluorescence, second harmonic generation (SHG), third harmonic generation (THG), sum frequency generation (SFG), and two photon excited fluorescence (TPEF).

12. A device (100) of any previous claims, wherein the stripes in the metal grating 004 are continuous with a length of at least 10 μm for enhancing four wave mixing (FWM) signal intensity without two photon excited luminescence (TPEL) background in SECARS imaging.

13. A method for manufacturing the plasmonic device (100) of any previous claims, wherein the method comprises at least the following steps:

- providing a plasmonic structure (003, 004) on a substrate (001), said plasmonic structure (003, 004) comprising

  ▪ a full metal layer (003) and
  ▪ a metal grating (004) in connection with the full metal layer (003), wherein the metal grating comprises elongated metal stripes and elongated empty spacing or grooves between the stripes, wherein the periodicity (007) of the adjacent elongated metal stripes in the metal grating (004) comprises the sum of the width (005) of one elongated metal stripe and the width (006) of the empty spacing or grooves of two adjacent elongated metal stripes

**characterized by** providing the full metal layer as having thickness of 50 - 100 nm and selecting the periodicity (007) to resonate with either the molecular vibrational frequency of a substance in the sample or a frequency of laser light or narrow frequency band LED light used to excite optical processes in the sample or both of them.

14. A method of claim 13, wherein:

- the providing of the plasmonic structure (003, 004) comprising a full metal layer (003) and/or a metal grating (004) is performed by using electron beam lithography (EBL) or nanoimprint lithography (NIL) techniques, the lift-off technique or by wet or dry etching process, and
- the providing of the optional protective layer is performed by using deposition methods such as vacuum evaporation, sputtering, plasma enhanced chemical vapor deposition (PECVD), and atomic layer deposition (ALD).

**Patentansprüche**

1. Plasmonische Vorrichtung (100) zur Verbesserung optischer Prozesse in Proben, die auf oder in der Nähe der Oberfläche der Vorrichtung liegen, wobei die Vorrichtung (100) Folgendes umfasst:

- ein Substrat (001),
- eine plasmonische Struktur (003, 004), umfassend:

  o eine Vollmetallschicht (003) und
  o ein Metallgitter (004) in Verbindung mit der Vollmetallschicht (003), wobei das Metallgitter längliche Metallstreifen und längliche leere Zwischenräume oder Rillen zwischen den Streifen umfasst,
  wobei die Periodizität (007) der benachbarten länglichen Metallstreifen in dem Metallgitter (004) die Summe der Breite (005) eines länglichen Metallstreifens und der Breite (006) der leeren Zwischenräume oder Rillen zweier benachbarter länglicher Metallstreifen umfasst,
  **dadurch gekennzeichnet, dass** die Dicke der Vollmetallschicht 50 nm-100 nm beträgt und dass die Periodizität (007) so gewählt ist, dass sie entweder mit der molekularen Schwingungsfrequenz einer Substanz in der Probe oder einer Frequenz von Laserlicht oder LED-Licht mit schmalem Frequenzband, das verwendet wird, um optische Prozesse in der Probe anzuregen, oder mit beiden resoniert.

2. Vorrichtung (100) nach Anspruch 1, wobei die Dicke des Substrats (001) im Bereich von 50 μm bis 5 mm liegt, die Vorrichtung zusätzlich eine Haftschicht (002) zwischen dem Substrat und der plasmonischen Struktur umfasst, wobei die Dicke der Haftschicht (002) im Bereich von etwa 1-50 nm liegt und/oder die Dicke des Metallgitters (004) im Bereich von 10-200 nm liegt.

3. Vorrichtung (100) nach einem der vorhergehenden Ansprüche, wobei die Breite (005) der länglichen Metallstreifen in dem Metallgitter (004) im Bereich von 10-1000 nm liegt, und/oder wobei der Leerabstand oder die Rillen (006) zwischen den zwei benachbarten länglichen Metallstreifen in dem Metallgitter (004) im Bereich von 10-1000 nm liegen.

4. Vorrichtung (100) nach einem der vorhergehenden Ansprüche, wobei die Periodizität (007) in dem Metallgitter (004) im Bereich von 10-1000 nm liegt.

5. Vorrichtung (100) nach einem der vorhergehenden Ansprüche, wobei die Vorrichtung zusätzlich eine Schutzschicht über der Vollmetallschicht oder dem Metallgitter umfasst, wobei die Dicke der Schutzschicht im Bereich von 1-50 nm liegt.

6. Vorrichtung (100) nach einem der vorhergehenden Ansprüche, wobei das Substrat (001) der plasmonischen Vorrichtung (100) ein Material umfasst, das ausgewählt ist aus der Gruppe von Deckglas (Borosilikatglas), Quarz, Normalglas (Silicaglas), Calci-

umfluorid (CaF$_2$) und Silizium.

7. Vorrichtung (100) nach einem der vorhergehenden Ansprüche, wobei die Vorrichtung zusätzlich eine Haftschicht (002) zwischen dem Substrat und der plasmonischen Struktur umfasst und die Haftschicht (002) unter Verwendung eines Materials abgeschieden wird, das ausgewählt ist aus der Gruppe von Chrom, Titan und TiO$_2$.

8. Vorrichtung (100) nach einem der vorhergehenden Ansprüche, wobei die Vollmetallschicht (003) und/oder das Metallgitter (004) ein plasmonisches Material umfasst, das ausgewählt ist aus der Gruppe von Gold, Silber, Kupfer, Platin, Palladium, Aluminium oder irgendeinem anderen Material, das die optischen Prozesse verstärkt.

9. Vorrichtung (100) nach einem der vorhergehenden Ansprüche, wobei die Vorrichtung zusätzlich eine Schutzschicht über der Vollmetallschicht oder dem Metallgitter umfasst, wobei die Schutzschicht ein dielektrisches Material wie etwa Al$_2$O$_3$, TiO$_2$, SiO$_2$ umfasst.

10. Vorrichtung (100) nach einem der vorhergehenden Ansprüche, wobei die Periodizität der Vorrichtung ausgewählt ist, um die optischen Prozesse der Raman-Streuung (RS), der linearen und nichtlinearen oberflächenverstärkten Raman-Streuung (SERS), der kohärenten Anti-Stokes-Raman-Streuung (CARS) und der oberflächenverstärkten kohärenten Anti-Stokes-Raman-Streuung (SECARS), der stimulierten Raman-Streuung (SRS) zu verstärken.

11. Vorrichtung (100) nach einem der vorhergehenden Ansprüche, wobei die Periodizität der Vorrichtung ausgewählt ist, um die optischen Prozesse der Fluoreszenz, der Erzeugung zweiter Harmonischer (SHG), der Erzeugung dritter Harmonischer (THG), der Summenfrequenzerzeugung (SFG) und der Zwei-Photonenangeregten Fluoreszenz (TPEF) zu verstärken.

12. Vorrichtung (100) nach einem der vorhergehenden Ansprüche, wobei die Streifen in dem Metallgitter (004) kontinuierlich mit einer Länge von mindestens 10 $\mu$m zur Verbesserung der Signalintensität des Vier-Wellen-Mischens (FWM) ohne Zwei-Photonenangeregte-Lumineszenz (TPEL)-Hintergrund in der SECARS-Bildgebung sind.

13. Verfahren zum Herstellen der plasmonischen Vorrichtung (100) nach einem der vorhergehenden Ansprüche, wobei das Verfahren mindestens die folgenden Schritte umfasst:

 - Bereitstellen einer plasmonischen Struktur (003, 004) auf einem Substrat (001), wobei die plasmonische Struktur (003, 004) Folgendes umfasst

 o eine Vollmetallschicht (003) und
 o ein Metallgitter (004) in Verbindung mit der Vollmetallschicht (003), wobei das Metallgitter längliche Metallstreifen und längliche leere Zwischenräume oder Rillen zwischen den Streifen umfasst,
 wobei die Periodizität (007) der benachbarten länglichen Metallstreifen in dem Metallgitter (004) die Summe der Breite (005) eines länglichen Metallstreifens und der Breite (006) des leeren Zwischenraums oder der Nuten zweier benachbarter länglicher Metallstreifen umfasst,
 **gekennzeichnet durch** Bereitstellen der Vollmetallschicht mit einer Dicke von 50-100 nm und Auswählen der Periodizität (007), um entweder mit der molekularen Schwingungsfrequenz einer Substanz in der Probe oder einer Frequenz von Laserlicht oder schmalbandigem LED-Licht, das verwendet wird, um optische Prozesse in der Probe anzuregen, oder beiden in Resonanz zu treten.

14. Verfahren nach Anspruch 13, wobei:

 - das Bereitstellen der plasmonischen Struktur (003, 004) umfassend eine Vollmetallschicht (003) und/oder ein Metallgitter (004) unter Verwendung von Elektronenstrahl-Lithographie (EBL) oder Nanoimprint-Lithographie (NIL)-Techniken, der Lift-off-Technik oder durch Nass- oder Trockenätzverfahren durchgeführt wird, und
 - das Bereitstellen der optionalen Schutzschicht unter Verwendung von Abscheideverfahren erfolgt, wie z.B. Vakuumverdampfung, Sputtern, plasmaunterstützte chemische Gasphasenabscheidung (PECVD) und Atomlagenabscheidung (ALD).

## Revendications

1. Dispositif plasmonique (100) pour améliorer des processus optiques dans les échantillons situés sur ou à proximité de la surface du dispositif, lequel dispositif (100) comprend :

 - un substrat (001) ;
 - une structure plasmonique (003, 004) comprenant :

 o une couche métallique pleine (003) et

o un réseau métallique (004) relié à la couche métallique pleine (003), dans lequel le réseau métallique comprend des bandes métalliques allongées et des espaces vides allongés ou rainures entre les bandes, dans lequel la périodicité (007) des bandes métalliques allongées adjacentes à l'intérieur du réseau métallique (004) comprend la somme de la largeur (005) d'une bande métallique allongée et de la largeur (006) de l'espace vide ou des rainures de deux bandes métalliques adjacentes,

**caractérisé en ce que** l'épaisseur de la couche métallique pleine est comprise entre 50 nm et 100 nm et **en ce que** la périodicité (007) est choisie pour résonner soit avec la fréquence de vibration moléculaire d'une substance dans l'échantillon, soit avec une fréquence de lumière laser ou de lumière LED à bande de fréquence étroite utilisée pour exciter des processus optiques dans l'échantillon, soit avec les deux.

2. Dispositif (100) selon la revendication 1, dans lequel l'épaisseur du substrat (001) est comprise entre 50 $\mu$m et 5 mm, le dispositif comprenant en outre une couche d'adhérence (002) entre le substrat et la structure plasmonique, l'épaisseur de la couche d'adhérence (002) étant comprise entre 1 nm et 50 nm, et/ou l'épaisseur du réseau métallique (004 comprise entre 10 nm et 200 nm

3. Dispositif (100) selon l'une quelconque des revendications précédentes, dans lequel la largeur (005) des bandes métalliques allongées à l'intérieur du réseau métallique (004) est comprise entre 10 nm et 1000 nm et/ou dans lequel l'espace vide ou les rainures (006) entre les deux bandes métalliques allongées adjacentes à l'intérieur du réseau métallique (004) sont compris entre 10 nm et 1000 nm.

4. Dispositif (100) selon l'une quelconque des revendications précédentes, dans lequel la périodicité (007) dans le réseau métallique (004) est comprise entre 10 nm et 1000 nm.

5. Dispositif (100) selon l'une quelconque des revendications précédentes, dans lequel le dispositif comprend en outre une couche de protection au-dessus de la couche métallique pleine ou du réseau métallique, l'épaisseur de la couche de protection étant comprise entre 1 nm et 50 nm.

6. Dispositif (100) selon l'une quelconque des revendications précédentes, dans lequel le substrat (001) du dispositif plasmonique (100) comprend un matériau choisi parmi le groupe de verre à lamelles (verre borosilicaté), de quartz, de verre normal (verre de silice), de fluorure de calcium ($CaF_2$) et de silicium.

7. Dispositif (100) selon l'une quelconque des revendications précédentes, dans lequel le dispositif comprend en outre une couche d'adhérence (002) entre le substrat et la structure plasmonique et la couche d'adhérence (002) est déposée à l'aide d'un matériau choisi parmi le groupe du chrome, du titane et du H02.

8. Dispositif (100) selon l'une quelconque des revendications précédentes, dans lequel la couche métallique pleine (003) et/ou le réseau métallique (004) comprend un matériau plasmonique choisi parmi le groupe de l'or, de l'argent, du cuivre, du platine, du palladium, de l'aluminium ou tout autre matériau qui améliore les processus optiques.

9. Dispositif (100) selon l'une quelconque des revendications précédentes, dans lequel le dispositif comprend en outre une couche de protection au-dessus de la couche métallique pleine ou du réseau métallique, dans lequel la couche de protection comprend un matériau diélectrique, tel que Al203, Tich, Sich.

10. Dispositif (100) selon l'une quelconque des revendications précédentes, dans lequel la périodicité du dispositif est choisie pour améliorer les processus optiques de diffusion Raman (RS), de diffusion Raman linéaire et non linéaire de surface exaltée (SERS), de diffusion Raman anti-Stokes cohérente (CARS) et de diffusion Raman anti-Stokes cohérente de surface exaltée (SECARS), de diffusion Raman stimulée (SRS).

11. Dispositif (100) selon l'une quelconque des revendications précédentes, dans lequel la périodicité du dispositif est choisie pour améliorer les processus optiques de fluorescence, de génération de deuxième harmonique (SHG), de génération de troisième harmonique (THG), de génération de fréquence somme (SFG) et de fluorescence sous excitation à deux photons (ARBRE).

12. Dispositif (100) selon l'une quelconque des revendications précédentes, dans lequel les bandes à l'intérieur du réseau métallique 004 sont continues avec une longueur d'au moins 10 $\mu$m pour améliorer l'intensité du signal de mélange à quatre ondes (FWM) sans fond de luminescence sous excitation à deux photons (TREL) dans l'imagerie SECARS.

13. Procédé de fabrication du dispositif plasmonique (100) selon l'une quelconque des revendications précédentes, dans lequel le procédé comprend au moins les étapes suivantes :

- la fourniture d'une structure plasmonique (003, 004) sur un substrat (001), la structure plasmonique (003, 004) comprenant

■ une couche métallique pleine (003) et
■ un réseau métallique (004) relié à la couche métallique pleine (003), dans lequel le réseau métallique comprend des bandes métalliques allongées et des espaces vides allongés ou rainures entre les bandes, dans lequel la périodicité (007) des bandes métalliques allongées adjacentes à l'intérieur du réseau métallique (004) comprend la somme de la largeur (005) d'une bande métallique allongée et de la largeur (006) des espaces vides ou rainures de deux bandes métalliques allongées adjacentes

**caractérisé en ce que** la couche métallique pleine a une épaisseur comprise entre 50 nm et 100 nm et **en ce que** la périodicité (007) est choisie pour résonner soit avec la fréquence de vibration moléculaire d'une substance dans l'échantillon, soit avec une fréquence de lumière laser ou de lumière LED à bande de fréquence étroite utilisée pour exciter des processus optiques dans l'échantillon, soit avec les deux.

14. Procédé selon la revendication 13, dans lequel :

- la fourniture de la structure plasmonique (003, 004) comprenant une couche métallique pleine (003) et/ou un réseau métallique (004) est effectuée à l'aide des techniques de lithographie par faisceau d'électrons (EBL) ou de lithographie par nanoempreinte (NIL), la technique de décollage ou par un processus de gravure humide ou sèche, et
- la fourniture de la couche de protection facultative est effectuée à l'aide des procédés de dépôt tels que l'évaporation sous vide, la pulvérisation, le dépôt chimique en phase vapeur enrichi au plasma (PECVD) et le dépôt de couche atomique (ALD).

**FIG. 1A - PRIOR ART**

**FIG. 1B - PRIOR ART**

FIG. 2A & 2B - PRIOR ART

FIG. 3A

FIG. 3B

FIG. 4

FIG. 5

**EP 3 574 351 B1**

**Patent documents cited in the description**

- US 2011267613 A
- US 2008316490 A
- US 2011085172 A